(19) Europäisches Patentamt
European Patent Office
Office européen des brevets

(11) **EP 4 416 406 B1**

(12) **EUROPÄISCHE PATENTSCHRIFT**

(45) Veröffentlichungstag und Bekanntmachung des
Hinweises auf die Patenterteilung:
**03.09.2025 Patentblatt 2025/36**

(21) Anmeldenummer: **22798327.7**

(22) Anmeldetag: **05.10.2022**

(51) Internationale Patentklassifikation (IPC):
*F16D 55/31* *(2006.01)*     *F16D 65/00* *(2006.01)*
*F16D 65/46* *(2006.01)*     *F16D 65/56* *(2006.01)*

(52) Gemeinsame Patentklassifikation (CPC):
**F16D 55/2255; F16D 65/183; F16D 65/568;**
F16D 2055/0037

(86) Internationale Anmeldenummer:
**PCT/EP2022/077638**

(87) Internationale Veröffentlichungsnummer:
**WO 2023/061815 (20.04.2023 Gazette 2023/16)**

(54) **SCHEIBENBREMSE MIT EINER SYNCHRONISATIONSMECHANIK**

DISC BRAKE WITH A SYNCHRONIZATION MECHANISM

FREIN À DISQUE DOTÉ D'UN MÉCANISME DE SYNCHRONISATION

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorität: **11.10.2021 DE 102021126280**

(43) Veröffentlichungstag der Anmeldung:
**21.08.2024 Patentblatt 2024/34**

(73) Patentinhaber: **KNORR-BREMSE Systeme für
Nutzfahrzeuge GmbH
80809 München (DE)**

(72) Erfinder: **IRASCHKO, Johann
85301 Schweitenkirchen (DE)**

(56) Entgegenhaltungen:
EP-A1- 2 895 760     EP-A1- 3 097 319
EP-A1- 3 112 718     EP-A1- 3 751 167
EP-B1- 2 895 760     EP-B1- 3 097 319
DE-A1- 102012 003 103     DE-A1- 102015 115 856

## Beschreibung

Die Erfindung betrifft eine Scheibenbremse mit einer Synchronisationsmechanik, insbesondere für ein Kraftfahrzeug, nach dem Oberbegriff des Anspruchs 1.

Fahrzeuge und bestimmte technische Geräte verwenden häufig Reibungsbremsen, um kinetische Energie umzuwandeln. Bevorzugt wird dabei speziell im Personenkraftwagen- und im Nutzfahrzeugbereich die Scheibenbremse.

Eine typische Bauform einer Scheibenbremse aus dem Stand der Technik ist in **Figur 1** in einer schematischen Teilschnittansicht gezeigt. Herkömmliche Ausführungsvarianten sind in **Figur 2 und 3** in schematischen Perspektivansichten dargestellt. **Figur 4, 5** zeigt schematische Ansichten herkömmlicher Synchronisationsmechaniken üblicher Scheibenbremsen 1.

Die Scheibenbremse 1 umfasst eine Bremsscheibe 2 mit einer Bremsscheibenachse 2a, einen Bremssattel 3 samt innerer Mechanik und in der Regel zwei Bremsbeläge 4, 5. Auf die innere Mechanik werden über einen Bremszylinder 17, der z.B. pneumatisch betätigt ist, die Zylinderkräfte eingeleitet, durch einen Exzentermechanismus verstärkt und als Zuspannkraft einer Zuspannvorrichtung über Gewindespindeln, die auf Bremsbeläge und Bremsscheibe übertragen, wobei über die Gewindestempel 7, 8, die auch Gewindespindeln genannt werden, der Verschleiß von Bremsscheibe 2 und Bremsbelägen 4, 5 ausgeglichen wird.

Die Gewindestempel 7, 8 sind üblicherweise untereinander durch eine Synchronisationsmechanik 12 (Synchroneinrichtung) zur gleichmäßigen Nachstellung des Verschleißes gekoppelt. Bei pneumatisch betätigten Scheibenbremsen ist der Bremssattel 3 in der Regel als Schiebesattel, Schwenksattel oder Festsattel ausgebildet. In dem Bremssattel 3 ist die Zuspannvorrichtung in einem Zuspannabschnitt 3a angeordnet und dient dazu, die Bremsbeläge 4, 5 beidseits der Bremsscheibe 2 und die Bremsscheibe 2 miteinander in Wirkverbindung zu bringen, um durch Reibung eine Bremswirkung zu erzielen.

Die Zuspannvorrichtung weist einen Bremsdrehhebel 11 auf, der an seinem unteren Ende einen Exzenteransatz aufweist, der über ein erstes Schwenklager drehbar in dem Zuspannabschnitt 3a des Bremssattels 3 gelagert ist und der über eine Stützwalze an einer Traverse 6 abgestützt ist, in welche die Gewindestempel 7, 8 eingeschraubt sind, die über Druckstücke auf den aktionsseitigen Bremsbelag 4 einwirken können, um diesen bei Bremsungen in Richtung der Bremsscheibe 2 zu verschieben. Diese bekannte pneumatisch betätigte Scheibenbremse weist zudem eine automatische Nachstellvorrichtung 9 auf, um den Belag- und Scheibenverschleiß auszugleichen.

Ein Beispiel einer solchen Nachstellvorrichtung und deren Funktion beschreibt das Dokument DE 10 2004 037 771 A1, sowie das Dokument EP 2 895 760 B1.

Zum Ausgleich des Belagverschleißes sind die Gewindestempel 7, 8 mit einem Außengewinde versehen. Damit der Belagverschleiß ausgeglichen werden kann, müssen die Gewindestempel 7, 8 mittels der automatischen Nachstellvorrichtung 9 entsprechend gedreht werden. Da die Nachstellvorrichtung 9 bei der Scheibenbremse 1 mit zwei Gewindestempeln 7, 8 nur bei einem Gewindestempel 7 angeordnet ist, ist es erforderlich den zweiten Gewindestempel 8 mit Hilfe eines Übertragungselements, das im Weiteren als Synchronelement 13 bezeichnet wird, und einer sogenannten Mitnehmereinrichtung 10 mitzudrehen.

Die Nachstellvorrichtung 9 wirkt hier drehend auf den ersten Gewindestempel 7 ein, um durch eine Relativverschraubung zwischen Gewindestempel 7 und der Traverse 6 die Länge dieser Mutter-/Spindelanordnung zu verändern, wodurch die Gesamtlänge der Zuspannvorrichtung zwischen dem Bremsbelag und dem Widerlager der Zuspannvorrichtung am Inneren des Zuspannabschnitts 3a des Bremssattels 3 vergrößert wird, wodurch wiederum der zunehmende Belagverschleiß ausgeglichen wird.

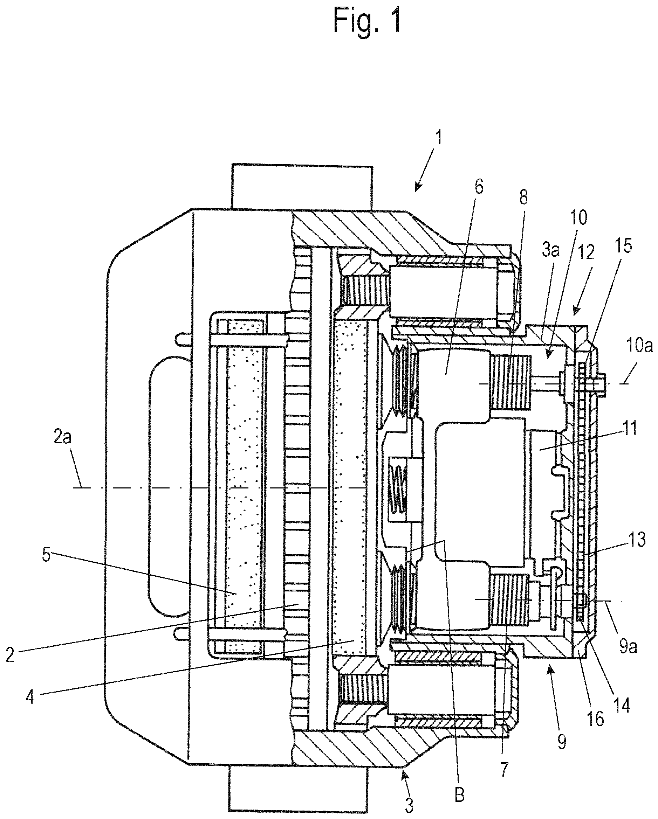

Die in Figur 1 gezeigten zwei Gewindestempel 7 und 8 sind über die Synchronisationsmechanik 12 gekoppelt, welche eine Verdrehung einer Welle der Nachstellvorrichtung 9, die mit dem ersten Gewindestempel 7 gekoppelt ist, um eine Nachstellerachse 9a auf eine Welle mit einer Mitnehmerachse 10a der Mitnehmereinrichtung 10, die mit dem zweiten Gewindestempel 8 gekoppelt ist, überträgt. Die Nachstellerachse 9a und die Mitnehmerachse 10a verlaufen parallel.

Die Synchronisationsmechanik 12 umfasst hier ein Synchronelement 13 und zwei Synchronräder 14, 15. Das Synchronelement 13 ist eine Kette bzw. Rollenkette oder ein Zahnriemen und wirkt als Umschlingungsgetriebe mit den Synchronrädern 14, 15 zusammen. Die Synchronräder 14, 15 sind in dem gezeigten Beispiel Kettenräder, von denen ein erstes Synchronrad 14 mit dem ersten Gewindestempel 7 drehfest gekoppelt ist. Ein zweites Synchronrad 15 ist mit der Welle der Mitnehmereinrichtung 10 und somit mit dem anderen Gewindestempel 8 drehfest verbunden.

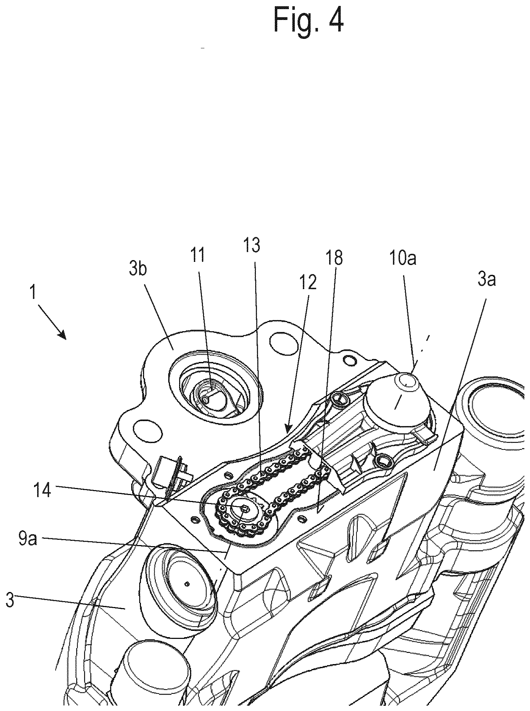

Die Scheibenbremse 1 ist so konzipiert, dass die Rollenkette als Synchronelement 13 außerhalb des Zuspannabschnitts 3a des Sattels 3 auf einer Stirnseite 18 einer Wand des Zuspannabschnitts 3a angeordnet ist. Das Synchronelement 13 einschließlich der Synchronräder 14, 15 und den Bereichen um die Synchronräder 14, 15 ist innerhalb eines separaten, abgedichteten Deckels 16 angeordnet. Dies ist in **Figur 4** verdeutlicht. Die Rollenkette als Synchronelement 13 ist beidseitig einer gedachten Verbindungslinie der Nachstellerachse 9a und der Mitnehmerachse 10a angeordnet.

Das Dokument EP 0 566 008 A1 illustriert eine druckluftbetätigte Scheibenbremse.

Von der pneumatisch betätigten Scheibenbremse 1 gibt es bzgl. der Bremszylinderanordnung im Wesentlichen zwei Ausführungsvarianten.

Der Bremszylinder 17 ist an einem Flanschabschnitt 3b des Zuspannabschnitts 3a des Bremssattels 3 angebracht, z.B. angeschraubt und steht mit seinem Stößel mit dem Bremsdrehhebel 11 in Wirkverbindung. Der Bremsdrehhebel 11 ist von einem Hebelgehäuse 3c umgeben, welches hier ein Bestandteil des Zuspannabschnitts 3a des Bremssattels 3 ist.

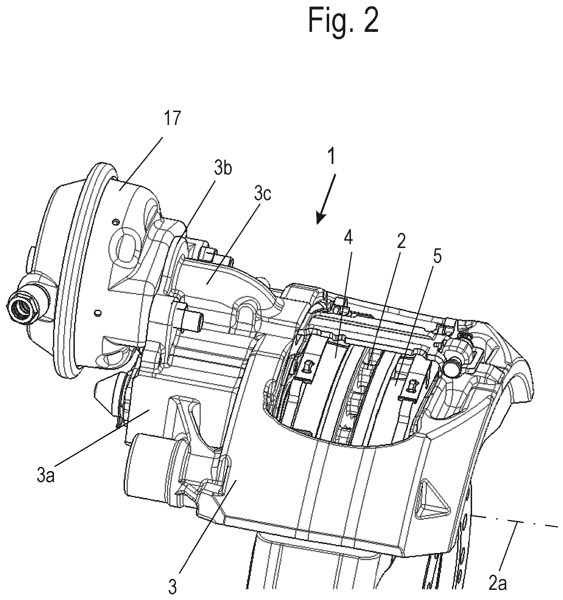

Die erste Variante ist die sogenannte Axialbremse (Figur 2). Damit ist die Ausrichtung des Bremszylinders 17 zu der Bremsscheibenachse 2a der Bremsscheibe 2 gemeint. Bei der Axialausführung ist die Wirkrichtung des Bremszylinders 17 weitgehend parallel zur Bremsscheibenachse 2a der Bremsscheibe 2 orientiert.

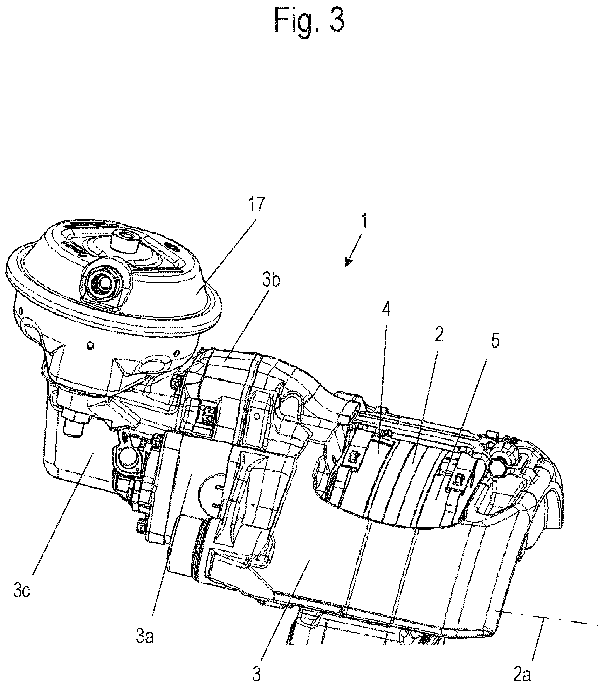

Die zweite Variante ist die sogenannte Radialbremse (Figur 3). Bei dieser Radialbremse ist die Wirkrichtung des Bremszylinders 17 weitgehend senkrecht bzw. radial zu der Bremsscheibenachse 2a der Bremsscheibe 2 orientiert.

Ein weiteres Konstruktionsmerkmal der hier angeführten Scheibenbremsen 1 ist die Ausführung des Bremssattels 3 als ein sogenannter Monoblocksattel. Damit ist gemeint, dass der Bremssattel 3 (Schiebesattel) aus einem einzigen Gussteil besteht. Diese Bauart ermöglicht es einerseits die Robustheit, Festigkeit und Steifigkeit zu erhöhen und andererseits die Herstellkosten zu senken.

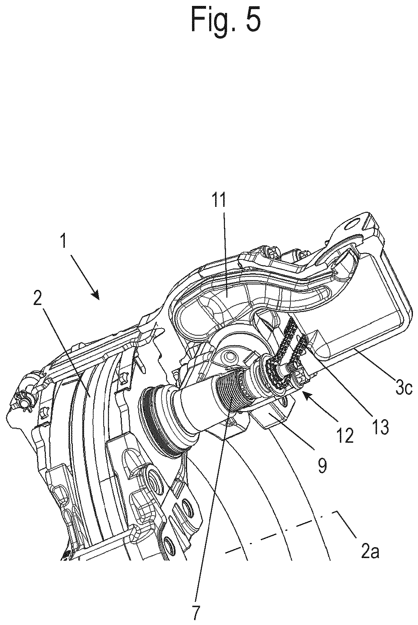

Die Monoblockbauart des Bremssattels 3 lässt sich jedoch bei der Radialbremse und der bisherigen Anordnung der Rollenkette als Synchronelement 13 der Synchronisationsmechanik 12 nicht darstellen. Dies erweist sich als nachteilig. Um den Freigang des Bremsdrehhebels 11 zu gewährleisten, ist es aufgrund der Anordnung der Rollenkette notwendig den Bremsdrehhebel 11 derart stark auszukröpfen, dass sich für den Bremsdrehhebel 11 eine sehr ausladende, schwanenhalsähnliche Form ergibt. Diese Lösung zeigt Figur 5. Dabei wird es auch als nachteilig gesehen, dass auch das Gewicht des Bremsdrehhebels 11 dadurch sehr ungünstig beeinflusst wird.

Ein besonderer Nachteil ist es aber, dass aufgrund dieser ausladenden Formgebung des Bremsdrehhebels 11 es nicht mehr möglich ist, den Bremsdrehhebel 11 über eine Öffnung im Bremssattel 3 in der Ausführung als Monoblocksattel in den Zuspannabschnitt 3a, im Gegensatz zum Bremssattel 3 der Axialbremse, einzuführen. Diese Öffnung im Bremssattel 3 ist eine Öffnung des Zuspannabschnitts 3a, welche zur Bremsscheibe 2 hin weist und durch ein sogenanntes Bodenblech B verschlossen ist. Die Gewindestempel 7, 8 erstrecken sich durch dieses Bodenblech B parallel zu der Bremsscheibenachse 2a zur Bremsscheibe 2 hin (siehe Figur 1). Dies wird auch als Bodenblechschnittstelle bezeichnet.

Somit ist es nicht möglich, den Bremssattel 3 (Radialsattel) der Radialbremse als Monoblocksattel zu konzipieren. Die aktuelle Radialbremse besteht daher aus drei Gussteilen, welche mit relativ aufwendigen Schnittstellen miteinander verschraubt werden müssen. Die Dichtheit und Festigkeit der Schnittstellen sind dabei nur mit relativ großem Aufwand zu gewährleisten. Dies wird als besonders nachteilig gesehen.

Daher besteht die Aufgabe der Erfindung darin, eine verbesserte Scheibenbremse mit einer verbesserten Synchronisationsmechanik für die Gewindestempel der Nachstellmechanik zu schaffen, welche es gestattet, auch den Bremssattel der Radialbremse als Monoblocksattel darzustellen.

Die Lösung dieser Aufgabe ist das Ziel der Erfindung.

Die Erfindung löst diese Aufgabe durch den Gegenstand des Anspruchs 1.

Eine erfindungsgemäße Scheibenbremse, insbesondere für ein Kraftfahrzeug, umfasst einen Bremssattel, der einen Zuspannabschnitt aufweist, in dem eine Zuspannvorrichtung mit einem Bremsdrehhebel, mindestens zwei Gewindestempel, eine Nachstellvorrichtung und eine Mitnehmereinrichtung angeordnet sind, und eine Synchronisationsmechanik zur Synchronisation der Drehbewegungen der Gewindestempel, wobei die Synchronisationsmechanik außerhalb des Gehäuses des Bremssattels innerhalb eines abgedichteten Deckels auf dem Zuspannabschnitt des Bremssattels angeordnet ist, wobei die Synchronisationsmechanik mindestens ein Synchronelement und zwei Synchronräder aufweist, von denen ein erstes Synchronrad mit dem einen Gewindestempel und ein zweites Synchronrad mit dem anderen Gewindestempel gekoppelt ist. Die Synchronisationsmechanik ist auf dem Zuspannabschnitt des Bremssattels um ein Hebelgehäuse des Bremsdrehhebels, welches von dem Zuspannabschnitt des Bremssattels hervorsteht, herumgeführt angeordnet.

Durch die erfindungsgemäße Anordnung der Synchronisationsmechanik für die Nachstellgewindespindeln ist es auf diese Weise vorteilhaft möglich, den Bremsdrehhebel so zu gestalten, dass seine Montage so wie bei der Axialbremse über die Öffnung für das Bodenblech möglich ist.

Ein weiterer bedeutender Vorteil, dass der Bremsdrehhebel eine möglichst einfache und kompakte Gestalt erhält, ergibt sich dadurch, dass die Synchronisationsmechanik um den Hebel herumgeführt wird.

Weiterhin wird vorteilhaft erreicht, dass aufgrund von Einschränkungen hinsichtlich des Einbaus der Bremse im Fahrzeug die Synchronisationsmechanik so angeordnet ist, dass der zulässige Einbauraum für die Bremse nicht überschritten wird.

Die Synchronisationsmechanik ist daher vorteilhaft so angeordnet, dass sie außerhalb der Radfelge und auf der dem Achskörper des Fahrzeugs abgewendeten Seite des Bremssattelgehäuses angeordnet ist.

Weitere vorteilhafte Ausgestaltungen sind den übrigen Unteransprüchen zu entnehmen.

In einer Ausführung weist der Bremssattel einen seitlich an dem Zuspannabschnitt angebrachten bzw. angeformten balkonartigen Trägerabschnitt auf, welcher in Richtung einer Bremsscheibenachse von dem Zuspannabschnitt des Bremssattels hervorsteht, wobei eine Oberseite des Trägerabschnitts in einer gemeinsamen Ebene zusammen mit einer Stirnseite des Zuspannabschnitts verläuft. Damit wird vorteilhaft eine Vergrößerung der Fläche erzielt, um die Synchronisationsmechanik in einfacher Weise um das Hebelgehäuse herum anzuordnen.

Dies ist besonders vorteilhaft, wenn der Trägerabschnitt eine zusätzliche Gusskontur des Zuspannabschnitts des Bremssattels ist, da so zusätzliche Montagearbeiten zum Anbringen des Trägerabschnitts entfallen.

Eine Ausführung sieht vor, dass das mindestens eine Synchronelement der Synchronisationsmechanik eine Kette bzw. Rollenkette oder ein Zahnriemen ist und als Umschlingungsgetriebe mit den Synchronrädern zusammenwirkt, wobei die Synchronisationsmechanik innerhalb des abgedichteten Deckels auf dem Zuspannabschnitt und auf dem Trägerabschnitt des Bremssattels angeordnet ist. Eine Kette ist ein robustes, kostengünstiges Bauteil und kann am Markt in hoher Qualität erhalten werden. Dies gilt auch für einen Zahnriemen.

Es ist von Vorteil, dass das mindestens eine Synchronelement mit Hilfe einer Kettenführung um das Hebelgehäuse des Bremsdrehhebels herumgeführt angeordnet ist.

In einer Ausführung weist die Kettenführung Führungselemente in Form von zylindrischen Domen, Umlenkrollen und/oder Führungsschienen auf. Damit kann vorteilhaft einfach eine reibungsarme Führung ermöglicht werden.

In einer weiteren Ausführung ist ein Verlauf des mindestens einen Synchronelementes um das Hebelgehäuse des Bremsdrehhebels herum ein Bestandteil einer gedachten Trapezform, wobei der Verlauf des Synchronelementes in einem Bereich schräger Ränder des Trägerabschnitts, welche Bestandteile der Schenkel des gedachten Trapezes bilden, und eines geraden Rands des Trägerabschnitts, welcher die kurze Grundseite des gedachten Trapezes ist, angeordnet. Diese Anordnung ist vorteilhaft platzsparend.

Eine alternative Ausführung sieht vor, dass das mindestens eine Synchronelement der Synchronisationsmechanik aus einer Anzahl von Synchronzahnrädern gebildet ist und als Stirnradgetriebe mit den Synchronrädern zusammenwirkt, wobei die Synchronisationsmechanik innerhalb des abgedichteten Deckels auf dem Zuspannabschnitt und auf dem Trägerabschnitt des Bremssattels angeordnet ist. Dies ist vorteilhaft, da Übertragungsverluste kaum durch die Größe der Auslenkung beeinflusst werden. Von Vorteil sind auch die kostengünstigen Zahnräder, die kostengünstig in hoher Qualität verfügbar sind. Auch eine Montage gestaltet sich einfach.

In einer anderen alternativen Ausführung ist das mindestens eine Synchronelement der Synchronisationsmechanik aus einer Anzahl von Synchronwellen gebildet, welche untereinander und mit den Synchronrädern über Kopplungseinheiten, die jeweils an den Enden der Synchronwellen angebracht sind, gekoppelt sind. Vorteilhaft hierbei ist ein geringe Teilezahl und ein einfacher Einbau.

Weiterhin ist es in einer Ausführung von Vorteil, wenn die Kopplungseinheiten Kegelräder aufweisen, wobei die Synchronräder Tellerräder mit Kegelverzahnung sind. Diese Bauteile sind kostengünstig.

In einer alternativen Ausführung können die Kopplungseinheiten Kreuzgelenke, Gleichlaufgelenke oder elastische Kopplungselemente aufweisen. Auch diese Bauteile sind am Markt in hoher Qualität kostengünstig verfügbar.

Eine vorteilhafte Reduzierung der Teilezahl bietet sich in einer anderen Ausführung an, wenn das mindestens eine Synchronelement der Synchronisationsmechanik aus einer oder mehreren biegsamen Wellen gebildet ist.

In einer besonders bevorzugten Ausführung ist der Bremssattel zusammen mit dem Trägerabschnitt einstückig als ein Monoblocksattel ausgebildet. Dabei ist es von besonderem Vorteil, dass sich eine einfache und günstige Montage ergibt. Ein weiterer wichtiger Vorteil hierbei ist es, dass aufgrund der Monoblockbauweise eine Gewichtsreduzierung durch Einsparung von Gussgewicht ermöglicht werden kann.

In einer anderen bevorzugten Ausführung ist die Scheibenbremse druckluftbetätigt. Dies ist vorteilhaft, da diese Bauart zuverlässig und robust ist.

Gegenüber dem bisherigen Stand der Technik kann somit durch die Erfindung ein sogenannter Monoblocksattel als Bremssattel mit folgenden Vorteilen realisiert werden:
Deutliche Kosteneinsparung (weniger Gussteile, Vermeidung von Schnittstellen).

Verbesserung der Robustheit und Zuverlässigkeit durch Vermeidung von verschraubten und gedichteten Schnittstellen im Bereich des Bremssattelgehäuses. Vereinfachte und günstigere Montage.

Gewichtsreduzierung durch Einsparung von Gussgewicht aufgrund der Monoblockbauweise.

Verringerung der Belastung und damit Erhöhung der Robustheit der Bremssattellagerung aufgrund des verringerten Bremssattelgewichts.

Günstigere Einbaubedingungen im Fahrzeug aufgrund der kompakteren Bauweise des Bremssattels.

Ausführungsbeispiele der Erfindung werden nachfolgend anhand der beigefügten Zeichnungen beschrieben. Diese Ausführungsbeispiele dienen lediglich der Veranschaulichung der Erfindung anhand bevorzugter Konstruktionen, welche aber die Erfindung nicht abschließend darstellen. Es sind insofern im Rahmen der Ansprüche auch andere Ausführungsbeispiele sowie Modifikationen und Äquivalente der dargestellten Ausführungsbeispiele realisierbar.

Die Erfindung wird nun anhand beispielhafter Ausführungen mit Bezug auf die beigefügten Zeichnungen näher erläutert. Hierbei zeigen:

Figur 1          eine schematische Teilschnittansicht einer Scheibenbremse aus dem Stand der Technik;

Figur 2-3        schematische Perspektivansichten von Ausführungsvarianten von Scheibenbremsen aus dem Stand der Technik;

Figur 4-5        schematische Ansichten herkömmlicher Synchronisationsmechaniken von Scheibenbremsen aus dem Stand der Technik;

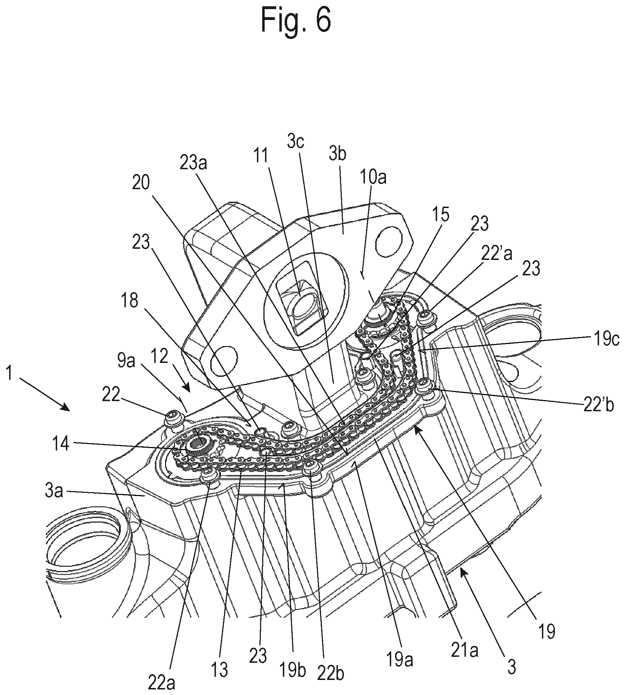

Figur 6          eine schematische Perspektivansicht eines Ausführungsbeispiels einer erfindungsgemäßen Scheibenbremse mit einer erfindungsgemäßen Synchronisationsmechanik;

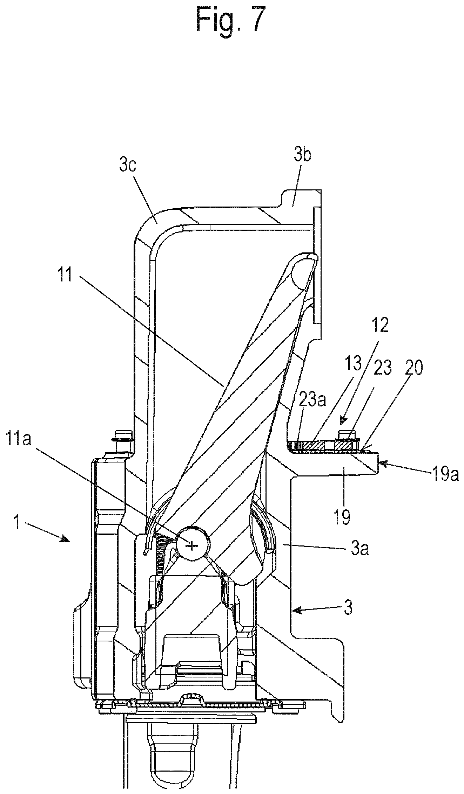

Figur 7          eine vergrößerte Schnittansicht eines Hebelgehäuses eines Bremssattels des Ausführungsbeispiels nach Figur 6;

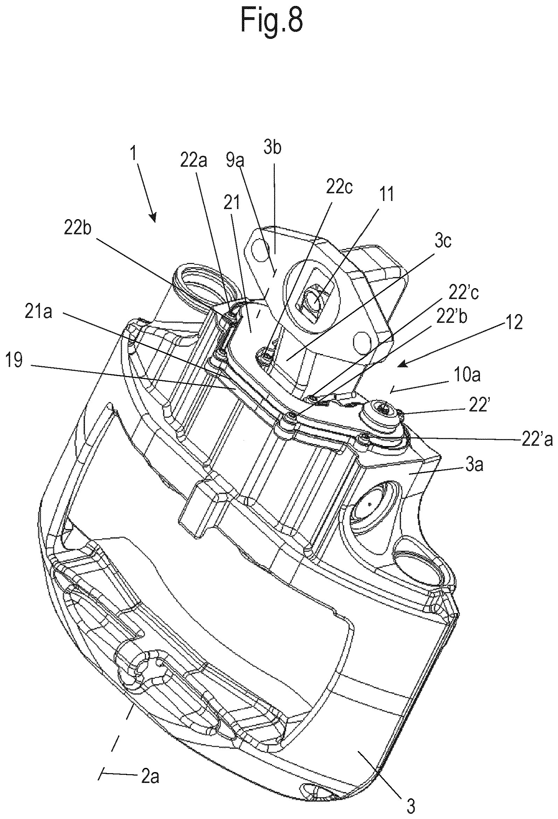

Figur 8          eine schematische Perspektivansicht des Ausführungsbeispiels der erfindungsgemäßen Scheibenbremse nach Figur 6; und

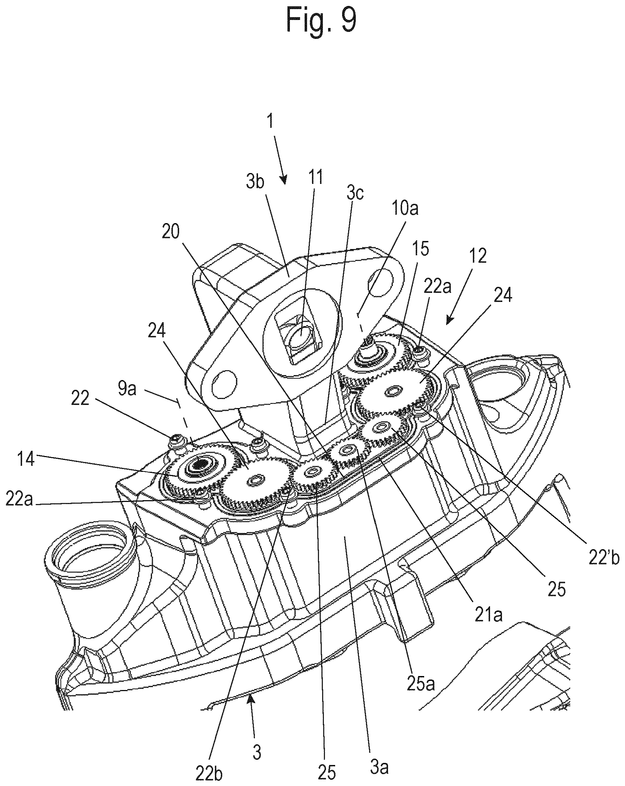

Figur 9-10       schematische Perspektivansichten von Varianten des Ausführungsbeispiels nach Figur 6.

Die Figuren 1 bis 5 aus dem Stand der Technik sind oben bereits beschrieben.

**Figur 6** zeigt eine schematische Perspektivansicht einer Synchronisationsmechanik 12 des Ausführungsbeispiels nach Figur 6. In **Figur 7** ist vergrößerte Schnittansicht eines Hebelgehäuses 3c eines Bremssattels 3 des Ausführungsbeispiels der erfindungsgemäßen Scheibenbremse 1 nach Figur 6 dargestellt. **Figur 8** zeigt eine schematische Perspektivansicht eines Ausführungsbeispiels einer erfindungsgemäßen Scheibenbremse 1 in einer Draufsicht.

Wie in Figur 6 dargestellt ist, steht das Hebelgehäuse 3c des Bremsdrehhebels 11 der Radialbremse, d.h. Scheibenbremse 1, in Richtung der Bremsscheibenachse 2a von dem Zuspannabschnitt 3a des Bremssattels 3 hervor. Das Hebelgehäuse 3c ist in der Mitte der Stirnseite 18 des Zuspannabschnitts 3a zwischen der Nachstellerachse 9a und der Mitnehmerachse 10a angeordnet.

In dem Hebelgehäuse 3c ist der Bremsdrehhebel 11 angeordnet. In Figur 6 ist das Ende des Hebelarms des Bremsdrehhebels 11 innerhalb einer Öffnung des Flanschabschnitts 3b zu erkennen. Dieses Ende des Hebelarms wirkt mit dem Stößel des an dem Flanschabschnitt 3b anzubringenden Bremszylinders 17 zusammen.

Damit der Bremsdrehhebel 11 eine möglichst einfache und kompakte Gestalt erhält, muss die Übertragungsmechanik der Synchronisationsmechanik 12 um den Bremsdrehhebel 11 und sein Hebelgehäuse 3c herumgeführt werden. Andererseits muss aufgrund von Einschränkungen hinsichtlich des Einbaus der Scheibenbremse in einem Fahrzeug die Synchronisationsmechanik 12 so angeordnet sein, dass der zulässige Einbauraum für die Scheibenbremse 1 in dem Fahrzeug nicht überschritten wird.

Die Synchronisationsmechanik 12 ist daher so angeordnet, dass sie außerhalb der Radfelge und auf der dem Achskörper des Fahrzeugs abgewendeten Seite des Sattelgehäuses des Bremssattels 3 angeordnet ist.

Die Herumführung der Synchronisationsmechanik 12 um das Hebelgehäuse 3c bedingt eine Erweiterung einer Fläche der Stirnseite 18. Dazu weist der Bremssattel 3 einen seitlich an dem Zuspannabschnitt 3a angebrachten bzw. angeformten balkonartigen Trägerabschnitt 19 auf. Dieser Trägerabschnitt 19 steht in Richtung der Bremsscheibenachse 2a von dem Zuspannabschnitt 3a des Bremssattels 3 hervor.

Eine Oberseite 20 des Trägerabschnitts 19 verläuft in einer gemeinsamen Ebene zusammen mit der Stirnseite 18 des Zuspannabschnitts 3a und bildet zu dieser eine Erweiterung.

Der Trägerabschnitt 19 dient zudem zur Abstützung eines Deckels 21, welcher die Synchronisationsmechanik schützt. Eine Abdichtung des Deckels 21 wird durch eine Deckeldichtung 21a ermöglicht, die im Randbereich der Oberseite 20 des Trägerabschnitts 19 und auf der Stirnseite 18 des Zuspannabschnitts 3a auf diese in geeigneter Weise, z.B. in passende Konturen eingelegt, bzw. aufgebracht wird.

Der Trägerabschnitt 19 kann z.B. eine zusätzliche Gusskontur des Zuspannabschnitts 3a des Bremssattels 3 sein.

Hierzu zeigt **Figur 7** eine vergrößerte Schnittansicht des Hebelgehäuses 3c des Bremssattels 3 des Ausführungsbeispiels nach Figur 6. Der Bremsdrehhebel 11 mit seinem Hebelarm und dessen Ende sind in schlanker Gestalt in dem Hebelgehäuse 3c angeordnet. Der Bremsdrehhebel 11 ist um eine Drehhebelachse 11a verdrehbar, welche hier in einem Winkel von 90° zu der Bremsscheibenachse 2a verläuft.

Der Trägerabschnitt 19 ist hier einstückig mit dem Zuspannabschnitt 3a des Bremssattels 3 ausgebildet.

Der Trägerabschnitt 19 kann an dem Rand des Zuspannabschnitts 3a längs der gesamten Länge des Rands oder über eine geringere Länge angeordnet sein. Es sind unterschiedliche geometrische Formen des Trägerabschnitts 19 möglich. Beispielsweise zeigt Figur 6 eine Trapezform, Figur 9 Bogenstücke mit unterschiedlichen Radien und gerade Verläufen. Auch Rechteckformen sind denkbar. Die Ränder dieser Formen sind mit teilzylindrischen Domen versehen, welche für die Befestigung von Befestigungselementen 22 des Deckels 21 dienen. Natürlich sind auch andere Verläufe der Ränder möglich.

In **Figur 8** ist der Bremssattel 3 als Monoblocksattel dargestellt. Die Synchronisationsmechanik 12 ist mit dem Deckel 21 verschlossen. Der Deckel 21 ist an seinem umlaufenden Rand mit Befestigungselementen 22, 22a, 22b, 22c und 22', 22'a, 22'b, 22'c, z.B. Schrauben, auf dem Trägerabschnitt 19 befestigt. Der Deckel 21 und die Synchronisationsmechanik 12 sind in dem gezeigten Beispiel symmetrisch zu einer Symmetrieachse, die parallel zu der Bremsscheibenachse 2a durch die Mitte einer gedachten Verbindungslinie von Nachstellerachse 9a und Mitnehmerachse 10a verläuft.

Als Übertragungselement dient wie bei der Axialbremse (siehe Figur 4) eine Rollenkette als Synchronelement 13. Die Gewindestempel 7, 8 (siehe Figur 1) sind in Figur 5 und in den weiteren Figuren jeweils mit der Nachstellerachse 9a und der Mitnehmerachse 10a angedeutet. Die Kopplung der beiden Gewindestempel 7, 8 mit der Rollenkette kann in diesem Fall nicht auf direkten Weg erfolgen. Unter dem Begriff "direkter Weg" ist eine gedachte gerade Linie zwischen den Achsen 9a und 10a zu verstehen, welche hier durch das von dem Zuspannabschnitt 3a des Bremssattels 3 hervorstehende Hebelgehäuse 3c "blockiert" ist.

Aufgrund der vorhergeschilderten Bedingungen muss das Synchronelement 13 (Kette) mit Hilfe einer Kettenführung um den Hebel herumgeführt werden. Diese Kettenführung weist hier Führungselemente 23, 23a in Form von zylindrischen Domen und Führungsschienen auf.

Ein Verlauf des Synchronelementes 13 auf der Stirnseite 18 des Zuspannabschnitts 3a und der Oberseite des Trägerabschnitts 19 um das Hebelgehäuse 3c herum kann als Bestandteil einer gedachten Trapezform beschrieben werden. Dieses gedachte Trapez ist gebildet aus einer langen Grundseite zwischen der Nachstellerachse 9a und der Mitnehmerachse 10a. Parallel dazu verläuft die kürzere Grundseite als freier Rand 19a des Trägerabschnitts 19. Die Schenkel des gedachten Trapezes werden aus den schrägen Rändern 19b, 19c des Trägerabschnitts 19 gebildet.

Dabei ist der Verlauf des Synchronelementes 13 im Bereich der schrägen Ränder 19b, 19c und des geraden Rands 19a angeordnet.

Hierbei ist wichtig, dass die Führung der Kette als Synchronelement 13 möglichst reibungsarm erfolgt, damit die Übertragungsverluste bedingt durch die Reibung der Kette an den Umlenkungsstellen der Dome nicht zu groß werden. Je größer die Umlenkungswinkel sind, desto größere Übertragungsverluste können entstehen. Der Zusammenhang kann mit der Seilreibungsgleichung beschrieben werden.

$$F_1 = F_2 * e^{\phi\mu}$$

Mit:

$F_1$: Zugkraft an der Kette nach der Umlenkung
$F_2$: Zugkraft an der Kette vor der Umlenkung
$\phi$: Auslenkungswinkel
$\mu$: Reibungskoeffizient

Um die Übertragungsverluste zu minimieren kann die Umlenkung der Kette auch mit Umlenkrollen erfolgen. Die Anwendbarkeit dieser Lösung ist jedoch vom zur Verfügung stehenden Bauraum abhängig.

Anstelle einer Rollenkette kann auch ein Zahnriemen als Synchronelement 13 verwendet werden. Dies ist nicht gezeigt, aber leicht vorstellbar. In diesem Fall sind die Synchronräder 14, 15 entsprechend als Zahnriemenräder ausgebildet.

**Figur 9** zeigt eine schematische Perspektivansicht einer ersten Variante des Ausführungsbeispiels nach Figur 6.

In dieser ersten Variante wird als Synchronelement 13 eine Anzahl von Synchronzahnrädern 24, 25, 25a, z.B. Stirnzahnräder, verwendet. Im dem in Figur 9 dargestellten Beispiel umfasst die Synchronisationsmechanik 12 fünf Synchronzahnräder 24, 25, 25a und zwei Synchronräder 14, 15.

Die Synchronräder 14, 15 sind hier als Stirnzahnräder ausgeführt und stehen jeweils mit einem ersten Synchronzahnrad 24 in Eingriff. Diese ersten Synchronzahnräder 24 sind jeweils in Eingriff mit einem zweiten Synchronrad 25, die ihrerseits beide mit einem gemeinsamen Synchronrad 25a in Eingriff stehen. Eine ungerade Anzahl von Synchronzahnrädern 24, 25, 25a ist erforderlich, um gleichen Drehsinn der Gewindestempel 7, 8 zu erhalten, ansonsten müsste das Gewinde eines der Gewindestempel 7, 8 ein Linksgewinde sein.

Im Gegensatz zu dem Synchronelement 13 als Rollenkette werden die Übertragungsverluste in dieser Variante kaum durch die Größe der Auslenkung, d.h. durch den Winkel zwischen den Seiten des gedachten Trapezes, beeinflusst. Die Übertragungsverluste werden hauptsächlich durch die Anzahl der Synchronzahnräder 24, 25, 25a bestimmt

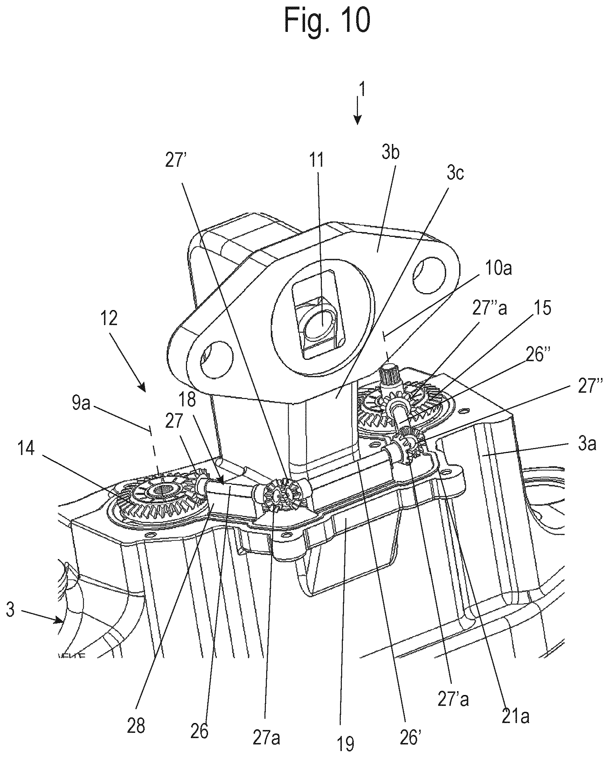

In einer zweiten Variante des Ausführungsbeispiels nach Figur 6, welches **Figur 10** in einer schematische Perspektivansicht darstellt, werden als Synchronelemente bzw. Übertragungselemente Wellen verwendet, die hier als Synchronwellen 26, 26', 26" bezeichnet sind.

In dem gezeigten Beispiel umfasst die Synchronisationsmechanik 12 drei Synchronwellen 26, 26', 26", vier Kopplungseinheiten und zwei Synchronräder 14, 15.

Die Synchronwellen 26, 26', 26" sind untereinander und mit den Synchronrädern 14, 15 über die Kopplungseinheiten mit Kegelrädern oder auch anderen Kopplungselementen (z.B. Kreuzgelenke, Gleichlaufgelenke oder elastische Kopplungselemente), die jeweils an den Enden der Synchronwellen 26, 26', 26" angebracht sind, gekoppelt.

Die Synchronwellen 26, 26', 26" sind jeweils über eine nicht näher beschriebene Lagerung 28, 28', 28" auf der Stirnseite 18 des Zuspannabschnitts 3a und der Oberseite 20 des Trägerabschnitts 19 angebracht.

Die Anordnung der drei Synchronwellen 26, 26', 26" ist in dieser Variante dergestalt, dass zwei Synchronwellen 26, 26", die jeweils mit einem Synchronrad 14, 15 gekoppelt sind, in den schrägen Seiten eines gedachten Trapezes verlaufen. Eine Synchronwelle 26', die mit den beiden anderen Synchronwellen 26, 26" gekoppelt ist, verläuft in der kurzen Grundseite des gedachten Trapezes.

Die Synchronräder 14, 15 sind in dieser Variante als Tellerkegelräder ausgebildet. Dementsprechend sind Koppelräder 27, 27a; 27', 27'a; 27", 27"a der Synchronwellen 26, 26', 26" als Kegelräder ausgebildet. Die Synchronräder 14, 15 sind Tellerräder mit Kegelverzahnung.

Das erste Synchronrad 14 steht mit einem Koppelrad 27 der ersten Synchronwelle 26 in Eingriff. Das andere Koppelrad 27a der ersten Synchronwelle 26 und ein Koppelrad 27' der zweiten Synchronwelle 26' bilden die Kopplung der Synchronwellen 26 und 26'. In ähnlicher Weise sind die zweite Synchronwelle 26' und die dritte Synchronwelle 26" über ihre Koppelräder 27'a und 27" gekoppelt. Das andere Koppelrad 27"a steht in Eingriff mit dem zweiten Synchronrad 15.

Denkbar ist auch die Übertragung der Drehbewegungen der Gewindestempel 7, 8 mittels der Synchronisationsmechanik mit einer oder mehreren biegsamen Wellen.

Die Erfindung wird durch die oben beschriebenen Ausführungsbeispiele nicht eingeschränkt. Sie ist im Rahmen der beigefügten Ansprüche modifizierbar.

Der Verlauf des Synchronelementes 13 als Kette kann als Bogenform mit einem Radius oder aus mehreren Bögen mit unterschiedlichen Radien bestehende Bogenform ausgebildet sein. In diesem Fall ist aber das Maß des Hervorstehens des Rands des Trägerabschnitts 19 von dem Zuspannabschnitt 3a des Bremssattels 3 zu beachten, da sich evtl. größere Einbaumaße der Scheibenbremse 1 ergeben können.

**Bezugszeichenliste**

| | |
|---|---|
| 1 | Scheibenbremse |
| 2 | Bremsscheibe |
| 2a | Bremsscheibenachse |
| 3 | Bremssattel |
| 3a | Zuspannabschnitt |
| 3b | Flanschabschnitt |
| 3c | Hebelgehäuse |
| 4, 5 | Bremsbelag |
| 6 | Traverse |
| 7, 8 | Gewindestempel |
| 9 | Nachstellvorrichtung |
| 9a | Nachstellerachse |
| 10 | Mitnehmereinrichtung |
| 10a | Mitnehmerachse |
| 11 | Bremsdrehhebel |
| 11a | Drehhebelachse |
| 12 | Synchronisationsmechanik |
| 13 | Synchronelement |
| 14, 15 | Synchronrad |
| 16 | Deckel |
| 17 | Bremszylinder |
| 18 | Stirnseite |
| 19 | Trägerabschnitt |
| 19a, 19b, 19c | Rand |
| 20 | Oberseite |
| 21 | Deckel |
| 21a | Deckeldichtung |

| 22, 22a, 22b; 22', 22'a, 22'b | Befestigungselement |
| 23, 23a | Führungselement |
| 24, 25 | Synchronzahnrad |
| 26, 26', 26" | Synchronwelle |
| 27, 27', 27"; 27a, 27'a, 27"a | Koppelrad |
| 28, 28', 28" | Lagerung |

B    Bodenblech

## Patentansprüche

1. Scheibenbremse (1), insbesondere für ein Kraftfahrzeug, mit einem Bremssattel (3), der einen Zuspannabschnitt (3a) aufweist, in dem eine Zuspannvorrichtung mit einem Bremsdrehhebel (11), mindestens zwei Gewindestempel (7, 8), eine Nachstellvorrichtung (9) und eine Mitnehmereinrichtung (10) angeordnet sind, und mit einer Synchronisationsmechanik (12) zur Synchronisation der Drehbewegungen der Gewindestempel (7, 8), wobei die Synchronisationsmechanik (12) außerhalb des Gehäuses des Bremssattels (3) innerhalb eines abgedichteten Deckels (21) auf dem Zuspannabschnitt (3a) des Bremssattels (3) angeordnet ist, wobei die Synchronisationsmechanik (12) mindestens ein Synchronelement (13) und zwei Synchronräder (14, 15) aufweist, von denen ein erstes Synchronrad (14) mit dem einen Gewindestempel (7) und ein zweites Synchronrad (15) ist mit dem anderen Gewindestempels (8) drehfest verbunden ist,
dadurch gekennzeichnet, dass die Synchronisationsmechanik (12) auf dem Zuspannabschnitt (3a) des Bremssattels (3) um ein Hebelgehäuse (3c) des Bremsdrehhebels (11), welches von dem Zuspannabschnitt (3a) des Bremssattels (3) hervorsteht, herumgeführt angeordnet ist.

2. Scheibenbremse (1) nach Anspruch 1, dadurch gekennzeichnet, dass der Bremssattel (3) einen seitlich an dem Zuspannabschnitt (3a) angebrachten bzw. angeformten balkonartigen Trägerabschnitt (19) aufweist, welcher in Richtung einer Bremsscheibenachse (2a) von dem Zuspannabschnitt (3a) des Bremssattels (3) hervorsteht, wobei eine Oberseite (20) des Trägerabschnitts (19) in einer gemeinsamen Ebene zusammen mit einer Stirnseite (18) des Zuspannabschnitts (3a) verläuft.

3. Scheibenbremse (1) nach Anspruch 2, dadurch gekennzeichnet, dass der Trägerabschnitt (19) eine zusätzliche Gusskontur des Zuspannabschnitts (3a) des Bremssattels (3) ist.

4. Scheibenbremse (1) nach Anspruch 2 oder 3, wobei dadurch gekennzeichnet, dass das mindestens eine Synchronelement (13) der Synchronisationsmechanik (12) eine Kette bzw. Rollenkette oder ein Zahnriemen ist und als Umschlingungsgetriebe mit den Synchronrädern (14, 15) zusammenwirkt, wobei die Synchronisationsmechanik (12) innerhalb des abgedichteten Deckels (21) auf dem Zuspannabschnitt (3a) und auf dem Trägerabschnitt (19) des Bremssattels (3) angeordnet ist.

5. Scheibenbremse (1) nach Anspruch 4, dadurch gekennzeichnet, dass das mindestens eine Synchronelement (13) mit Hilfe einer Kettenführung um das Hebelgehäuse (3c) des Bremsdrehhebels (11) herumgeführt angeordnet ist.

6. Scheibenbremse (1) nach Anspruch 5, dadurch gekennzeichnet, dass die Kettenführung Führungselemente (23, 23a) in Form von zylindrischen Domen, Umlenkrollen und/oder und Führungsschienen aufweist.

7. Scheibenbremse (1) nach einem der Ansprüche 2 bis 6 dadurch gekennzeichnet, dass ein Verlauf des mindestens einen Synchronelementes (13) um das Hebelgehäuse (3c) des Bremsdrehhebels (11) herum ein Bestandteil einer gedachten Trapezform ist, wobei der Verlauf des Synchronelementes (13) in einem Bereich schräger Ränder (19b, 19c) des Trägerabschnitts (19), welche Bestandteile der Schenkel des gedachten Trapezes bilden, und eines geraden Rands (19a) des Trägerabschnitts (19), welcher die kurze Grundseite des gedachten Trapezes ist, angeordnet.

8. Scheibenbremse (1) nach Anspruch 2 oder 3, dadurch gekennzeichnet, dass das mindestens eine Synchronelement (13) der Synchronisationsmechanik (12) aus einer Anzahl von Synchronzahnrädern (24, 25, 25a) gebildet ist und als Stirnradgetriebe mit den Synchronrädern (14, 15) zusammenwirkt, wobei die Synchronisationsmechanik (12) innerhalb des abgedichteten Deckels (21) auf dem Zuspannabschnitt (3a) und auf dem Trägerabschnitt (19) des Bremssattels (3) angeordnet ist.

9. Scheibenbremse (1) nach Anspruch 2 oder 3, **dadurch gekennzeichnet, dass** das mindestens eine Synchronelement (13) der Synchronisationsmechanik (12) aus einer Anzahl von Synchronwellen (26, 26', 26") gebildet ist, welche untereinander und mit den Synchronrädern (14, 15) über Kopplungseinheiten, die jeweils an den Enden der Synchronwellen (26, 26', 26") angebracht sind, gekoppelt sind.

10. Scheibenbremse (1) nach Anspruch 9, **dadurch gekennzeichnet, dass** die Kopplungseinheiten Kegelräder (27, 27', 27'a; 27", 27"a) aufweisen, wobei die Synchronräder (14, 15) Tellerräder mit Kegelverzahnung sind.

11. Scheibenbremse (1) nach Anspruch 9, **dadurch gekennzeichnet, dass** die Kopplungseinheiten Kreuzgelenke, Gleichlaufgelenke oder elastische Kopplungselemente aufweisen.

12. Scheibenbremse (1) nach Anspruch 2 oder 3, **dadurch gekennzeichnet, dass** das mindestens eine Synchronelement (13) der Synchronisationsmechanik (12) aus einer oder mehreren biegsamen Wellen gebildet ist.

13. Scheibenbremse (1) nach einem der vorstehenden Ansprüche, **dadurch gekennzeichnet, dass** der Bremssattel (3) zusammen mit dem Trägerabschnitt (19) einstückig als ein Monoblocksattel ausgebildet ist.

14. Scheibenbremse (1) nach einem der vorstehenden Ansprüche, **dadurch gekennzeichnet, dass** die Scheibenbremse (1) druckluftbetätigt ist.

**Claims**

1. Disc brake (1), in particular for a motor vehicle, with a brake caliper (3) which has a clamping section (3a) in which a clamping device with a brake rotary lever (11), at least two threaded pistons (7, 8), an adjustment device (9) and a driver apparatus (10) are arranged, and with a synchronization mechanism (12) for synchronizing the rotational movements of the threaded pistons (7, 8), wherein the synchronization mechanism (12) is arranged outside the housing of the brake caliper (3) within a sealed cover (21) on the clamping section (3a) of the brake caliper (3), wherein the synchronization mechanism (12) has at least one synchronizing element (13) and two synchronizing wheels (14, 15), a first synchronizing wheel (14) of which is connected to one threaded piston (7) and a second synchronizing wheel (15) is connected to the other threaded piston (8) in a rotationally fixed manner, **characterized in that** the synchronization mechanism (12) is arranged on the clamping section (3a) of the brake caliper (3) so as to be guided about a lever housing (3c) of the brake rotary lever (11), which lever housing protrudes from the clamping section (3a) of the brake caliper (3).

2. Disc brake (1) according to claim 1, **characterized in that** the brake caliper (3) has a balcony-like support section (19) which is attached to or integrally formed laterally on the clamping section (3a) and which protrudes from the clamping section (3a) of the brake caliper (3) in the direction of a brake disc axis (2a), wherein an upper side (20) of the support section (19) extends in a common plane together with an end face (18) of the clamping section (3a).

3. Disc brake (1) according to claim 2, **characterized in that** the support section (19) is an additional cast contour of the clamping section (3a) of the brake caliper (3).

4. Disc brake (1) according to claim 2 or 3, **characterized in that** the at least one synchronizing element (13) of the synchronizing mechanism (12) is a chain or roller chain or a toothed belt and interacts with the synchronizing wheels (14, 15) as a wrap-around gear, wherein the synchronizing mechanism (12) is arranged inside the sealed cover (21) on the clamping section (3a) and on the support section (19) of the brake caliper (3).

5. Disc brake (1) according to claim 4, **characterized in that** the at least one synchronizing element (13) is arranged around the lever housing (3c) of the brake rotary lever (11) with the aid of a chain guide.

6. Disc brake (1) according to claim 5, **characterized in that** the chain guide has guide elements (23, 23a) in the form of cylindrical domes, deflection rollers and/or and guide rails.

7. Disc brake (1) according to any one of claims 2 to 6, **characterized in that** a course of the at least one synchronizing element (13) around the lever housing (3c) of the brake rotary lever (11) is a component of an imaginary trapezoidal shape, wherein the course of the synchronizing element (13) is arranged in an area of slanted edges (19b, 19c) of the support section (19), which form components of the legs of the imaginary trapezoid, and of a straight edge (19a) of the support section (19), which is the short base side of the imaginary trapezoid.

8.  Disc brake (1) according to claim 2 or 3, **characterized in that** the at least one synchronizing element (13) of the synchronizing mechanism (12) is formed from a number of synchronizing gears (24, 25, 25a) and interacts with the synchronizing gears (14, 15) as a spur gear, wherein the synchronizing mechanism (12) is arranged within the sealed cover (21) on the clamping section (3a) and on the support section (19) of the brake caliper (3).

9.  Disc brake (1) according to claim 2 or 3, **characterized in that** the at least one synchronizing element (13) of the synchronization mechanism (12) is formed from a number of synchronizing shafts (26, 26', 26") which are coupled to one another and to the synchronizing wheels (14, 15) via coupling units which are attached in each case to the ends of the synchronizing shafts (26, 26', 26").

10. Disc brake (1) according to claim 9, **characterized in that** the coupling units have bevel gears (27, 27a; 27', 27'a; 27", 27"a), wherein the synchronizing gears (14, 15) are crown gears with bevel teeth.

11. Disc brake (1) according to claim 9, **characterized in that** the coupling units have universal joints, constant velocity joints or elastic coupling elements.

12. Disc brake (1) according to claim 2 or 3, **characterized in that** the at least one synchronizing element (13) of the synchronization mechanism (12) is formed from one or more flexible shafts.

13. Disc brake (1) according to any one of the preceding claims, **characterized in that** the brake caliper (3) together with the support section (19) is formed in one piece as a monoblock caliper.

14. Disc brake (1) according to any one of the preceding claims, **characterized in that** the disc brake (1) is actuated by compressed air.


**Revendications**

1.  Frein à disque (1), en particulier pour un véhicule automobile, avec un étrier de frein (3) qui présente une section de serrage (3a) dans laquelle un dispositif de serrage est disposé avec un levier rotatif de frein (11), au moins deux poinçons filetés (7, 8), un dispositif d'ajustage (9) et un appareil d'entraîneur (10), et avec un mécanisme de synchronisation (12) pour synchroniser les mouvements de rotation des poinçons filetés (7, 8), dans lequel le mécanisme de synchronisation (12) est disposé à l'extérieur du boîtier de l'étrier de frein (3) au sein d'un couvercle étanche (21) sur la section de serrage (3a) de l'étrier de frein (3), dans lequel le mécanisme de synchronisation (12) présente au moins un élément synchrone (13) et deux roues synchrones (14, 15), dont une première roue synchrone (14) est reliée à l'un des poinçons filetés (7), et une seconde roue synchrone (15) est reliée de manière immobile en rotation à l'autre poinçon fileté (8),
    **caractérisé en ce que** le mécanisme de synchronisation (12) est disposé sur la section de serrage(3a) de l'étrier de frein (3) autour d'un boîtier de levier (3c) du levier rotatif de frein (11) qui fait saillie de la section de serrage (3a) de l'étrier de frein (3).

2.  Frein à disque (1) selon la revendication 1, **caractérisé en ce que** l'étrier de frein (3) présente une section de support (19) à balcon, appliquée ou formée latéralement au niveau de la section de serrage (3a) qui fait saillie de la section de serrage (3a) de l'étrier de frein (3) en direction d'un axe de disque de frein (2a), dans lequel un côté supérieur (20) de la section de support (19) s'étend dans un plan commun avec un côté avant (18) de la section de serrage (3a).

3.  Frein à disque (1) selon la revendication 2, **caractérisé en ce que** la section de support (19) est un contour moulé supplémentaire de la section de serrage (3a) de l'étrier de frein (3).

4.  Frein à disque (1) selon la revendication 2 ou 3, **caractérisé en ce que** le au moins un élément synchrone (13) du mécanisme de synchronisation (12) est une chaîne ou une chaîne à rouleaux ou une courroie crantée et coopère avec les roues synchrones (14, 15) en tant qu'engrenage d'enroulement, dans lequel le mécanisme de synchronisation (12) est disposé au sein du couvercle étanche (21) sur la section de serrage (3a) et sur la section de support (19) de l'étrier de frein (3).

5.  Frein à disque (1) selon la revendication 4, **caractérisé en ce que** le au moins un élément synchrone (13) est disposé autour du boîtier de levier (3c) du levier rotatif de frein (11) à l'aide d'un guide-chaîne.

6. Frein à disque (1) selon la revendication 5, **caractérisé en ce que** le guide-chaîne présente des éléments de guidage (23, 23a) sous forme de dômes cylindriques, rouleaux de déviation et/ou rails de guidage.

7. Frein à disque (1) selon l'une quelconque des revendications 2 à 6, **caractérisé en ce qu'une** course de l'au moins un élément synchrone (13) autour du boîtier de levier (3c) du levier rotatif de frein (11) est un composant d'une forme trapézoïdale imaginaire, dans lequel la course de l'élément synchrone (13) est disposée dans une zone de bords obliques (19b, 19c) de la section de support (19), lesquels bords forment des composants des branches du trapèze imaginaire et d'un bord droit (19a) de la section de support (19) qui est le côté de base court du trapèze imaginaire.

8. Frein à disque (1) selon la revendication 2 ou 3, **caractérisé en ce que** le au moins un élément synchrone (13) du mécanisme de synchronisation (12) est formé d'un certain nombre de roues dentées synchrones (24, 25, 25a) et coopère en tant qu'engrenage cylindrique avec les roues synchrones (14, 15), dans lequel le mécanisme de synchronisation (12) est disposé au sein du couvercle étanche (21) sur la section de serrage (3a) et sur la section de support (19) de l'étrier de frein (3).

9. Frein à disque (1) selon la revendication 2 ou 3, **caractérisé en ce que** le au moins un élément synchrone (13) du mécanisme de synchronisation (12) est formé d'un certain nombre d'arbres synchrones (26, 26', 26") qui sont couplés entre eux et aux roues synchrones (14, 15) par l'intermédiaire d'unités de couplage qui sont montées respectivement aux extrémités des arbres synchrones (26, 26', 26").

10. Frein à disque (1) selon la revendication 9, **caractérisé en ce que** les unités de couplage présentent des roues coniques (27, 27a ; 27', 27'a ; 27", 27"a), dans lequel les roues synchrones (14, 15) sont des couronnes dentées à denture conique.

11. Frein à disque (1) selon la revendication 9, **caractérisé en ce que** les unités de couplage présentent des joints universels, des joints homocinétiques ou des éléments de couplage élastiques.

12. Frein à disque (1) selon la revendication 2 ou 3, **caractérisé en ce que** le au moins un élément synchrone (13) du mécanisme de synchronisation (12) est formé d'un ou de plusieurs arbres flexibles.

13. Frein à disque (1) selon l'une quelconque des revendications précédentes, **caractérisé en ce que** l'étrier de frein (3) est formé d'un seul tenant avec la section de support (19) en tant qu'étrier monobloc.

14. Frein à disque (1) selon l'une quelconque des revendications précédentes, **caractérisé en ce que** le frein à disque (1) est actionné par air comprimé.

# Fig. 1

# Fig. 2

# Fig. 3

# Fig. 4

# Fig. 5

# Fig. 6

# Fig. 7

# Fig.8

# Fig. 9

# Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004037771 A1
- EP 2895760 B1
- EP 0566008 A1